(19) Europäisches Patentamt
European Patent Office
Office européen des brevets

(11) EP 2 723 789 B1

(12) **EUROPEAN PATENT SPECIFICATION**

(45) Date of publication and mention
of the grant of the patent:
**14.09.2016 Bulletin 2016/37**

(21) Application number: **12724530.6**

(22) Date of filing: **28.05.2012**

(51) Int Cl.:
*C08G 18/10* (2006.01)     *C08G 18/65* (2006.01)
*C08G 18/66* (2006.01)

(86) International application number:
**PCT/US2012/039785**

(87) International publication number:
**WO 2012/177361 (27.12.2012 Gazette 2012/52)**

(54) **POLYURETHANE FOAM ELASTOMERS FOR HIGH TEMPERATURE APPLICATIONS**

POLYURETHANSCHAUMSTOFFELASTOMERE FÜR HOCHTEMPERATURANWENDUNGEN

ÉLASTOMÈRES DE MOUSSE POLYURÉTHANE POUR DES APPLICATIONS À DES TEMPÉRATURES ÉLEVÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2011 US 201161499986 P**

(43) Date of publication of application:
**30.04.2014 Bulletin 2014/18**

(73) Proprietor: **Dow Global Technologies LLC
Midland, MI 48674 (US)**

(72) Inventors:
• BUCKLEY, Benjamin, J.
Macclesfield
Cheshire SK103JR (GB)
• JURIS, Christoph
59075 Hamm (DE)
• DAVIES, Andrew, M.
Ashton-Under-Lyne
Lancashire OL6 8AX (GB)

(74) Representative: **Beck Greener
Fulwood House
12 Fulwood Place
London WC1V 6HR (GB)**

(56) References cited:
**EP-A2- 1 795 472     WO-A1-00/18817
WO-A1-00/50483     DE-A1- 3 627 236
DE-A1- 19 548 770     US-A- 3 793 241
US-A- 4 017 428**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 723 789 B1

**Description**

This invention relates to polyurethane foam elastomers that are useful in high temperature applications.

Foamed polyurethane elastomers are commonly used as sealing devices such as gaskets, and in many other applications. Sealing devices of this type are often used in connection with internal combustion engines, where they may function as, for example, gaskets, air filter seals and endcaps. In these and many other applications, the sealing devices are routinely exposed to elevated temperatures, and so must be able to withstand those temperatures for prolonged periods without losing their performance characteristics. Certain recent trends in the vehicular field are exacerbating this problem. A drive to enclose the engine compartment of cars and trucks in order to reduce noise is leading to localized higher temperatures. In addition, higher temperatures are often associated with higher performance engines.

Existing foamed polyurethane elastomers struggle to meet the demands of these higher temperature applications. Therefore, there is a need, in these and many other applications, to provide a foamed polyurethane elastomer that is more resistant to exposure to high temperatures. The elastomer ideally is manufactured using commonly available processing equipment and inexpensive and readily available raw materials.

This invention is such an elastomer. The elastomer of this invention is a molded polyurethane foam that has a foam density from 250 to 550 kg/m$^3$, and is a reaction product of an aromatic polyisocyanate and an isocyanate-reactive component in the presence of an effective amount of a blowing agent, an effective amount of a surfactant and an effective amount of one or more catalysts, wherein the isocyanate-reactive component contains:

> a) a polyether polyol having a hydroxyl equivalent weight of from 800 to 3000, or a mixture of such polyols, which polyether polyol or mixture of polyols may contain dispersed polymer particles;
> b) from 1 to 5 parts by weight, per 100 parts by weight of component a), of an aliphatic diol chain extender having a hydroxyl equivalent weight of up to 75; and
> c) from 0.5 to 3 parts by weight, per 100 parts by weight of component a), of a crosslinker that contains at least three aliphatic hydroxyl groups and has a hydroxyl equivalent weight of up to 75.

The mixture of high equivalent weight polyether polyol(s), the aliphatic diol chain extender and the crosslinker has surprisingly been found to produce a foamed polyurethane elastomer that performs well in certain high temperature applications. In particular, the foamed polyurethane elastomer of the invention maintains a low compression set even after being exposed to 40% compression at a temperature of 100°C for a period of 22 hours or longer. This makes the elastomer especially suitable for use in certain high temperature applications such as, for example, gaskets and other sealing devices such as air filter seals and air filter endcaps that are used in connection with internal combustion engines or other engines. The elastomer is similarly useful in other applications in which it is exposed to elevated temperatures, such as gasketing or sealing devices in systems that handle hot fluids.

The invention is also a process for making an elastomeric molded polyurethane foam, comprising forming a mixture containing an aromatic polyisocyanate, an isocyanate-reactive component, at least one blowing agent, an effective amount of at least one surfactant and an effective amount of one or more catalysts, introducing the mixture into a mold, curing the mixture in the closed mold to form a molded polyurethane foam having a foam density from 250 to 550 kg/m$^3$, and demolding the polyurethane foam, wherein the isocyanate-reactive component contains:

> a) a polyether polyol having a hydroxyl equivalent weight of from 800 to 3000, or a mixture of such polyols, which polyether polyol or mixture of polyols may contain dispersed polymer particles;
> b) from 1 to 5 parts by weight, per 100 parts by weight of component a), of an aliphatic diol chain extender having a hydroxyl equivalent weight of up to 75; and
> c) from 0.5 to 3 parts by weight, per 100 parts by weight of component a), of a crosslinker that contains at least three aliphatic hydroxyl groups and has a hydroxyl equivalent weight of up to 75.

Suitable aromatic polyisocyanates include m-phenylene diisocyanate, toluene-2,4-diisocyanate, toluene-2,6-diisocyanate, naphthylene-1,5-diisocyanate, methoxyphenyl-2,4-diisocyanate, diphenylmethane-4,4'-diisocyanate (4,4'-MDI), diphenylmethane-2,4'-diisocyanate (2,4'-MDI), 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, a polymethylene polyphenylisocyanate (PMDI), toluene-2,4,6-triisocyanate and 4,4'-dimethyldiphenylmethane-2,2',5,5'-tetraisocyanate. Preferably the polyisocyanate is diphenylmethane-4,4'-diisocyanate, diphenylmethane-2,4'-diisocyanate, PMDI, or mixtures of two or more thereof.

Any of the foregoing aromatic polyisocyanates if desired can be formed into a urethane and/or urea group-containing, isocyanate-terminated prepolymer. Any of the foregoing organic polyisocyanates may be modified to contain groups such as biuret, allophonate and isocyanurate groups.

An especially preferred aromatic polyisocyanate has an average of 2.0 to 2.5 isocyanate groups per molecule and an isocyanate content of from 23-30% by weight. This especially preferred aromatic polyisocyanate is in some embodiments a mixture of 2,4'- and/or 4,4'-MDI with a polymeric MDI, or a mixture of 2,4'- and/or 4,4'-MDI with a polymeric MDI and a urethane-group containing prepolymer of MDI.

The isocyanate-reactive component contains at least one polyether polyol that has a hydroxyl equivalent weight 800 to 3000. The polyether polyol or mixture of polyether polyols preferably has an average hydroxyl equivalent weight from 1000 to 2200, more preferably from 1200 to 2000. The polyether polyol or mixture preferably nominally contains an average of from 2 to 4, more preferably from 2.3 to 3.2 hydroxyl groups per molecule.

Polyether polyols include, for example, polymers of propylene oxide, ethylene oxide, 1,2-butylene oxide, tetramethylene oxide, block and/or random copolymers thereof, and the like. Of particular interest are poly(propylene oxide) homopolymers; random copolymers of propylene oxide and ethylene oxide in which the poly(ethylene oxide) content is, for example, from about 1 to about 30% by weight; ethylene oxide-capped poly(propylene oxide) polymers; and ethylene oxide-capped random copolymers of propylene oxide and ethylene oxide. The polyether polyols may contain low levels of terminal unsaturation (for example, less than 0.02 meq/g or less than 0.01 meq/g). Examples of such low unsaturation polyether polyols include those made using so-called double metal cyanide (DMC) catalysts, as described for example in US Patent Nos. 3,278,457, 3,278,458, 3,278,459, 3,404,109, 3,427,256, 3,427,334, 3,427,335, 5,470,813 and 5,627,120.

One or more of the polyether polyols contained within the isocyanate-reactive component may contain dispersed polymer particles. Dispersions of polymer particles in polyether polyols are well known and are often referred to as "polymer polyols" or "copolymer polyols". The dispersed polymer particles may be, for example, a styrene polymer or copolymer, a styrene-acrylonitrile copolymer, polyacrylonitrile, a polyolefin such as polyethylene, a polyurea, a polyurethane, or other polymer that is capable of being stably dispersed in the polyether polyol. The particles may be grafted onto the polyether polyol molecules. The particles may have an average particle size of from 100 nanometers to 50 microns or more; a preferred size is from 250 nanometers to 25 microns.

The isocyanate-reactive component contains from about 1 to about 5 parts by weight, per 100 parts by weight of the polyether polyol(s) (component a)), of an aliphatic diol chain extender having a hydroxyl equivalent weight of up to about 75. A preferred hydroxyl equivalent weight is up to about 60. The diol chain extender is preferably devoid of nitrogen atoms. A preferred lower amount is at least 2 parts, and a preferred upper amount is 4 parts, per 100 parts by weight of component a). Examples of suitable aliphatic diol chain extenders include ethylene glycol, diethylene glycol, triethylene glycol, propylene glycol, dipropylene glycol, 1,4-butane diol, 1,6-hexane diol, cyclohexanedimethanol and the like. Ethylene glycol is an especially preferred aliphatic diol chain extender.

The isocyanate-reactive component also contains from about 0.5 to about 3 parts by weight, per 100 parts by weight of component a), of a crosslinker that contains at least three aliphatic hydroxyl groups and has a hydroxyl equivalent weight of up to about 75. A preferred hydroxyl equivalent weight is up to about 60. The crosslinker preferably contains an average of from 3 to 4 hydroxyl groups per molecule. The crosslinker preferably is devoid of nitrogen atoms. A preferred upper amount for the crosslinker is 2.5 parts per 100 parts by weight of component a). It is also preferred that the weight of the crosslinker does not exceed that of the aliphatic diol chain extender.

Examples of suitable crosslinkers include, for example, glycerin, trimethylolethane, trimethylolpropane, pentaerythritol, sucrose, mannitol, sorbitol, and alkoxylates of any of the foregoing that have a hydroxyl equivalent weight of up to 75. The alkoxylates may be, for example, ethoxylates and/or propoxylates of any one or more of the foregoing crosslinkers.

A preferred crosslinker is a liquid (at 22°C) ethoxylate and/or propoxylate of trimethylolpropane, having a hydroxyl equivalent weight of up to about 60. Among crosslinkers of this type is Polyol 3990, from Perstop UK Ltd.

Although it is possible to include other isocyanate-reactive materials in the isocyanate-reactive component, such materials, if present at all, preferably are present only in small amounts. Such other isocyanate-reactive materials preferably constitute at most 2%, more preferably at most 1% of the total weight of the isocyanate-reactive materials. It is especially preferred that the isocyanate-reactive component contains no more than 0.25%, still more preferably no more than 0.1% by weight of polyols (i.e., compounds having two or more hydroxyl groups) that contain tertiary amino groups or of compounds that contain primary or secondary amino groups.

The amount of aromatic polyisocyanate and isocyanate-reactive materials is selected to provide an isocyanate index from 75 to 150, more typically from 90 to 120 and still more typically from 95 to 115. Isocyanate index is 100 times the ratio of isocyanate groups to isocyanate-reactive groups in the formulation; the amount of isocyanate-reactive groups includes those contributed by isocyanate-reactive blowing agents such as water.

The reaction is performed in the presence of an effective amount of at least one surfactant. By "effective amount", it is meant an amount sufficient to stabilize the cells of the foaming reaction mixture until it has cured sufficiently to maintain its cellular structure.

A wide variety of silicone surfactants as are commonly used in making polyurethane foams can be used with this invention. Examples of such silicone surfactants are commercially available under the trade names Tegostab™ (Th. Goldschmidt and Co.), Niax™ (GE OSi Silicones) and Dabco™ (Air Products and Chemicals).

The reaction is also performed in the presence of an effective amount of at least one catalyst. A wide variety of materials are known to catalyze polyurethane-forming reactions and the reaction of isocyanate groups with isocyanate-reactive blowing agents such as water. These catalysts include, for example, tertiary amines, tertiary phosphines, various metal chelates, acid metal salts, strong bases, various metal alcoholates and phenolates and metal salts of organic acids. Catalysts of most importance are tertiary amine catalysts, which may be acid-blocked. Examples of tertiary amine catalysts include: trimethylamine, triethylamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, triethylenediamine and dimethylalkylamines where the alkyl group contains from 4 to 18 carbon atoms. Mixtures of these tertiary amine catalysts are often used.

Any of the foregoing amine catalysts can be blocked with an acid, particularly a carboxylic acid.

Examples of tin catalysts are stannic chloride, stannous chloride, stannous octoate, stannous oleate, dimethyltin dilaurate, dibutyltin dilaurate, other organotin compounds of the formula $SnR_n(OR)_{4-n}$, wherein R is alkyl or aryl and n is 0-2, and the like. Tin catalysts are often used in conjunction with one or more tertiary amine catalysts. Commercially available tin catalysts of interest include Dabco™ T-9 and T-95 catalysts (both stannous octoate compositions available from Air Products and Chemicals).

The catalyst(s) are present in an effective amount, by which it is meant an amount sufficient to increase the reaction rate between the polyisocyanate(s) and the isocyanate-reactive compound(s). Typically, only small amounts are needed, for example, each catalyst being employed from about 0.0015 to about 5% by weight of the isocyanate-reactive materials.

The reaction is also conducted in the presence of an effective amount of at least one blowing agent. By "effective amount", it is meant that enough of the blowing agent is used to provide a density in the range of 250 to 550 kg/m$^3$. Suitable blowing agents include physical blowing agents such as various low-boiling chlorofluorocarbons, fluorocarbons, hydrocarbons and the like. Fluorocarbons and hydrocarbons having low or zero global warming and ozone-depletion potentials are preferred among the physical blowing agents. Chemical blowing agents that decompose or react under the conditions of the polyurethane-forming reaction are also useful. By far the most preferred chemical blowing agent is water, which reacts with isocyanate groups to liberate carbon dioxide and form urea linkages.

In especially preferred embodiments, the blowing agent is water, which may be present in an amount from 0.25 to 2 parts, preferably 0.4 to 1.0 parts, by weight per 100 parts by weight of component a).

In addition to the foregoing components, the reaction may be conducted in the presence of various other optional ingredients such as cell openers; fillers such as calcium carbonate; pigments and/or colorants such as titanium dioxide, iron oxide, chromium oxide, azo/diazo dyes, phthalocyanines, dioxazines and carbon black; biocides; preservatives; antioxidants; flame retardants; and the like.

The elastomeric polyurethane foam is made by combining the various components of the reaction mixture, introducing the mixture into a mold, and curing the mixture in the closed mold. It is often convenient to combine all the ingredients except the isocyanates into a formulated polyol component, which is then mixed with the polyisocyanate to produce the foam. Alternatively, the various components can be brought to a mixhead separately, or in various subcombinations, where they are mixed and dispensed into the mold.

The mold may be heated to drive the cure, if necessary.

It is often desirable to overpack the mold, by which it is meant that more of the reaction mixture is introduced into the mold than is necessary to fill the mold after the mixture has expanded and cured. The extent of overpacking is expressed as

$$100\% \text{ X } [(A/B - 1]$$

wherein A represents the foam density, B represent the free rise density of the same foam formulation. Alternatively and equivalently, A represents the weight of the foam formulation charged to the mold to make the elastomer, and B represents the minimum amount of the foam formulation needed to just fill the mold after expansion and cure. The mold may be overpacked by from 50 to 200%, especially from 75 to 150%.

The cured polyurethane foam has a foam density of from about 250 to about 550 kg/m$^3$, preferably 350 to 550 kg/m$^3$, and still more preferably 400 to 550 kg/m$^3$.

The cured polyurethane foam is typically a soft material that exhibits a Shore A hardness of less than 40, preferably less than 30, more preferably from 15 to 30. The cured polyurethane foam advantageously has a tensile strength of at least 0.5 MPa or at least 0.8 MPa and an elongation at break of 120% or more.

The cured polyurethane foam made in accordance with this invention is unexpectedly resistant to exposure to elevated temperatures. One important characteristic of polyurethane foams used in many gasketing and sealing applications is low compression set, after the foam has been exposed to elevated temperatures for a prolonged period. A way of evaluating this characteristic is to compress the foam to 40% of its original thickness, and to heat the compressed foam at 100°C for 22 hours, followed by measuring the compression set of the foam according to ISO 1856. On this test, compression set is often below 20% and is preferably below 15%. In some cases, compression sets of 10% or less are obtained. The foam sample prior to testing should be aged at ambient conditions of temperature and humidity for 1 week after being demolded.

The following examples are provided to illustrate the invention, but are not intended to limit the scope thereof. All parts and percentages are by weight unless otherwise indicated. Raw materials described in the following examples are identified as follows:

Polyol A is an ethylene-oxide capped nominally trifunctional poly(propylene oxide). It has a hydroxyl equivalent weight of about 1625.

Polyol B is a nominally trifunctional random copolymer of ethylene oxide and propylene oxide. It has a hydroxyl equivalent weight of about 1675.

Crosslinker A is an ethoxylated trimethyolpropane having a hydroxyl equivalent weight of about 57.

MEG is ethylene glycol.

Catalyst A is an acid-blocked amine catalyst marketed by Air Products as Dabco™ 8154.

Catalyst B is a bis(2-dimethylaminoethyl)ether solution marketed by Momentive Performance Products as Niax™ A-1 catalyst.

The colorants are reactive liquid dyes marketed by Milliken Chemicals under the trade name Reactint™.

Surfactant A is an organosilicone surfactant marketed by Air Products as Niax L-3001 surfactant.

Polyisocyanate A is a urethane-modified mixture of MDI and a polymeric MDI. It has an isocyanate content of about 27% by weight and an isocyanate functionality of about 2.2-2.3.

Polyisocyanate B is based on MDI. It has an isocyanate content of about 27% by weight and an isocyanate functionality of about 2.2. Polyisocyanate B is marketed by Huntsmann as Suprasec™ 2015 polyisocyanate.

## Examples 1A-1D, 2A-2D

A formulated polyol is made by mixing the following ingredients:

| Ingredient | Parts by Weight |
|---|---|
| Polyol A | 91.66 |
| Polyol B | 1.00 |
| Crosslinker A | 2.00 |
| MEG | 3.00 |
| Surfactant A | 0.50 |
| Catalyst A | 1.20 |
| Colorants | 0.07 |
| Water | 0.50 |

Examples 1A-1D are made by processing the formulated polyol with Polyisocyanate A through a low pressure Rampf-Dosiertechnik Model C-DS machine. The ratios of the formulated polyol to polyisocyanate are varied as indicated in Table 1 below. Air is mixed into the reaction mixture at the mixhead at a machine setting of 40%. Output is set to 7 g/second. The mold is a cast aluminum mold at a temperature of 25-30°C. Demold time is 12-16 minutes.

Examples 2A-2D are made in the same manner, except that Polyisocyanate B substitutes for Polyisocyanate A.

Samples are aged at ambient conditions for one week before property testing. Tensile strength and elongation are measured according to DIN 53504-S31 at a pull rate of 100 mm/minute. Shore A hardness is measured according to DIN 53505-A, reading after 3 seconds. Foam density is measured according to DIN 53479A. Hot-aged compression set is measured by compressing samples to 40% of their original thickness and storing the compressed samples at 100°C for 22 hours. The samples are then released and compression set is measured according to ISO 1856.

Results of this testing are as indicated in Table 1.

**Table 1**

| Example | 1A | 1B | 1C | 1D | 2A | 2B | 2C | 2D |
|---|---|---|---|---|---|---|---|---|
| Polyol/Iso ratio | 100/36 | 100/38 | 100/40 | 100/42 | 100/36 | 100/38 | 100/40 | 100/42 |
| Isocyanate index | 90 | 95 | 100 | 105 | 92 | 97 | 102 | 107 |
| Foam density, kg/m$^3$ | 506 | 508 | 506 | 495 | 511 | 494 | 497 | 487 |
| Shore A hardness | 24 | 24 | 25 | 25 | 25 | 24 | 25 | 25 |
| Tensile str., MPa | 1.00 | 0.99 | 1.13 | 1.24 | 0.96 | 1.17 | 1.32 | 1.46 |
| Elongation, % | 154 | 146 | 144 | 145 | 142 | 151 | 157 | 157 |
| Hot-aged compression set, % | 17 | 14 | 9 | 9 | 14 | 14 | 13 | 10 |

As can be seen from the data in Table 1, hot-aged compression sets are consistently low across this set of examples.

**Examples 3A-3B and 4A-4B**

A polyol formulation is prepared as described in Example 1, except the water level is increased to 0.54 parts. Examples 3A-3B are made by processing this polyol formulation with Polyisocyanate A, in the manner described with respect to Examples 1A-1D. Examples 4A and 4B are made in the same manner, substituting Polyisocyanate B for Polyisocyanate A. Ratios are as indicated in Table 2. Properties of the resulting molded foams are measured as described in the previous examples; results are as indicated in Table 2.

**Table 2**

| Example | 3A | 3B | 4A | 4B |
|---|---|---|---|---|
| Polyol/Iso ratio | 100/40 | 100/42 | 100/40 | 100/42 |
| Isocyanate index | 98 | 103.5 | 100 | 105 |
| Foam density, kg/m$^3$ | 491 | 492 | 505 | 455 |
| Shore A hardness | 21 | 23 | 24 | 23 |
| Tensile str., MPa | 1.04 | 1.24 | 1.26 | 1.19 |
| Elongation, % | 149 | 150 | 141 | 136 |
| Hot-aged compression set, % | 11 | 6 | 7 | 11 |

Very low hot-aged compression sets are again seen with this set of examples.

**Examples 5A-5C**

A polyol formulation is prepared as described in Example 1, except that 0.1 part by weight of Catalyst B is also present. Examples 5A-5C are made by processing this polyol formulation with Polyisocyanate A in the manner described with respect to Examples 1A-1D. Ratios are as indicated in Table 3. Properties of the resulting molded foams are measured as described in the previous examples; results are as indicated in Table 3. In addition, a portion of the reaction mixture is dispensed into a cup and allowed to rise without constraint to determine its free rise density. % Overpacking is then calculated from the free rise density and the foam density.

**Table 3**

| Example | 5A | 5B | 5C |
|---|---|---|---|
| Polyol/Iso ratio | 100/38 | 100/40 | 100/42 |
| Isocyanate index | 95 | 101 | 106 |
| Free rise density, kg/m$^3$ | 220 | 207 | 198 |

(continued)

| Example | 5A | 5B | 5C |
|---|---|---|---|
| Foam density, kg/m$^3$ | 377 | 403 | 382 |
| % overpacking | 71 | 95 | 93 |
| Shore A hardness | 15 | 18 | 17 |
| Tensile str., MPa | 0.62 | 0.87 | 0.92 |
| Elongation, % | 164 | 168 | 157 |
| Hot-aged compression set, % | 17.4 | 15.7 | 13.7 |

Very low hot-aged compression sets are again seen with this set of examples.

For comparison, molded foams are made in the same general manner by reacting Polyisocyanate A with each of the following polyol formulations. The isocyanate index is in each case varied from about 95 to 105.

| Ingredient | Parts by Weight | |
|---|---|---|
| | Formulation A | Formulation B |
| Polyether polyol mixture[1] | 83.39 | 83.81 |
| Copolymer Polyol[2] | 10.5 | 10.5 |
| Ethylene glycol | 4.2 | 3.5 |
| Surfactant A | 0.5 | 0.5 |
| Catalyst mixture | 0.65 | 0.75 |
| Colorants | 0.23 | 0.26 |
| Water | 0.53 | 0.68 |

[1]A mixture of nominally trifunctional and difunctional ethylene oxide-capped polyether polyols having hydroxyl equivalent weights of about 1600-1900. [2]A 40% solids styrene-acrylonitrile dispersion in an ethylene oxide-capped polyether polyol that has a hydroxyl equivalent weight of about 1600.

The foams made from Formulation A are overpacked by 101-122%. Molded densities range from 462-514 kg/m$^3$. The hot aged compression set of these foams is measured after aging at only 70°C, rather than 100°C as with the examples of the invention. Despite the lower aging temperature, the compression sets range from about 24% to about 33%. The poorer compression set performance of foams made from Formulation A is attributed to a lack of crosslinker.

Foams made from Formulation B have even higher compression sets after aging at 70°C (about 32-37%), despite similar overpacking and similar foam densities. Again, the poorer compression sets are attributed to a lack of crosslinker.

**Examples 6A-6C**

A polyol formulation is prepared as described in Example 1, except the amount of water is increased to 0.6 parts. Examples 6A-6C are made by processing this polyol formulation with Polyisocyanate A in the manner described with respect to Examples 1A-1D. Ratios are as indicated in Table 4. Properties of the resulting molded foams are measured as described in the previous examples; results are as indicated in Table 4.

**Table 4**

| Example | 6A | 6B | 6C |
|---|---|---|---|
| Polyol/Iso ratio | 100/38 | 100/40 | 100/42 |
| Isocyanate index | 95 | 101 | 106 |
| Free rise density, kg/m$^3$ | 220 | 202 | 195 |

(continued)

| Example | 6A | 6B | 6C |
|---|---|---|---|
| Foam density, kg/m$^3$ | 452 | 426 | 397 |
| % Overpacking | 105 | 111 | 104 |
| Shore A hardness | 22 | 24 | 25 |
| Tensile str., MPa | 1.06 | 1.14 | 1.10 |
| Elongation, % | 191 | 182 | 179 |
| Hot-aged compression set, % | 15.0 | 11.6 | 15.9 |

Very low hot-aged compression sets are again seen with this set of examples.

**Claims**

1.   A molded polyurethane foam that has a foam density from 250 to 550 kg/m$^3$, and is a reaction product of an aromatic polyisocyanate and an isocyanate-reactive component in the presence of an effective amount of a blowing agent, an effective amount of a surfactant and an effective amount of one or more catalysts, wherein the isocyanate-reactive component contains:

a) a polyether polyol having a hydroxyl equivalent weight of from 800 to 3000, or a mixture of such polyols, which polyether polyol or mixture of polyols may contain dispersed polymer particles;
b) from 1 to 5 parts by weight, per 100 parts by weight of component a), of an aliphatic diol chain extender having a hydroxyl equivalent weight of up to 75; and
c) from 0.5 to 3 parts by weight, per 100 parts by weight of component a), of a crosslinker that contains at least three aliphatic hydroxyl groups and has a hydroxyl equivalent weight of up to 75.

2.   The molded polyurethane foam of claim 1 wherein the isocyanate-reactive component contains no more than 0.1% by weight of polyols that contain tertiary amino groups or of compounds that contain primary or secondary amino groups.

3.   The molded polyurethane foam of any preceding claim, wherein component c) is an ethoxylate and/or propoxylate of trimethylolpropane having a hydroxyl equivalent weight of up to 60 and component b) is ethylene glycol.

4.   The molded polyurethane foam of any preceding claim wherein the blowing agent is water.

5.   The molded polyurethane foam of any preceding claim, which has a hot aged compression set of below 15% and a Shore A hardness of less than 30.

6.   Use of the polyurethane foam of any preceding claim as a filter, gasket or sealing device in connection with an internal combustion engines.

7.   Use of the polyurethane foam of any of claims 1-5 as a filter, gasket or sealing device in connection with the handling of hot fluids.

8.   A process for making an elastomeric molded polyurethane foam of claim 1, comprising forming a mixture containing an aromatic polyisocyanate, an isocyanate-reactive component, at least one blowing agent, an effective amount of at least one surfactant and an effective amount of one or more catalysts, introducing the mixture into a mold, curing the mixture in the closed mold to form a molded polyurethane foam having a foam density from 250 to 550 kg/m$^3$, and demolding the polyurethane foam, wherein the isocyanate-reactive component contains:

a) a polyether polyol having a hydroxyl equivalent weight of from 800 to 3000, or a mixture of such polyols, which polyether polyol or mixture of polyols may contain dispersed polymer particles;
b) from 1 to 5 parts by weight, per 100 parts by weight of component a), of an aliphatic diol chain extender having a hydroxyl equivalent weight of up to 75; and

c) from 0.5 to 3 parts by weight, per 100 parts by weight of component a), of a crosslinker that contains at least three aliphatic hydroxyl groups and has a hydroxyl equivalent weight of up to 75.

9. The process of claim 8, wherein the mold is overpacked by from 50 to 200%.

**Patentansprüche**

1. Ein Polyurethan-Formschaumstoff, der eine Schaumdichte von 250 bis 550 kg/m$^3$ aufweist und ein Reaktionsprodukt eines aromatischen Polyisocyanats und einer isocyanatreaktiven Komponente in Gegenwart einer wirksamen Menge eines Treibmittels, einer wirksamen Menge eines Tensids und einer wirksamen Menge eines oder mehrerer Katalysatoren ist, wobei die isocyanatreaktive Komponente Folgendes enthält:

   a) ein Polyetherpolyol mit einem Hydroxyläquivalentgewicht von 800 bis 3000 oder ein Gemisch solcher Polyole, wobei das Polyetherpolyol oder Gemisch von Polyolen dispergierte Polymerpartikel enthalten kann;
   b) zu 1 bis 5 Gewichtsteilen pro 100 Gewichtsteilen der Komponente a) einen aliphatischen Diolkettenverlängerer mit einem Hydroxyläquivalentgewicht von bis zu 75; und
   c) zu 0,5 bis 3 Gewichtsteilen pro 100 Gewichtsteilen der Komponente a) einen Vernetzer, der mindestens drei aliphatische Hydroxylgruppen enthält und ein Hydroxyläquivalentgewicht von bis zu 75 aufweist.

2. Polyurethan-Formschaumstoff gemäß Anspruch 1, wobei die isocyanatreaktive Komponente nicht mehr als 0,1 Gew.-% an Polyolen, die tertiäre Aminogruppen enthalten, oder an Verbindungen, die primäre oder sekundäre Aminogruppen enthalten, enthält.

3. Polyurethan-Formschaumstoff gemäß einem der vorhergehenden Ansprüche, wobei Komponente c) ein Ethoxylat und/oder Propoxylat von Trimethylolpropan mit einem Hydroxyläquivalentgewicht von bis zu 60 ist und Komponente b) Ethylenglycol ist.

4. Polyurethan-Formschaumstoff gemäß einem der vorhergehenden Ansprüche, wobei das Treibmittel Wasser ist.

5. Polyurethan-Formschaumstoff gemäß einem der vorhergehenden Ansprüche mit einer Heißdruckverformung von unter 15 % und einer Shore-A-Härte von weniger als 30, gemessen wie in der Beschreibung angegeben.

6. Eine Verwendung des Polyurethanschaums gemäß einem der vorhergehenden Ansprüche als Filter, Dichtung oder Abdichtvorrichtung in Verbindung mit einem Verbrennungsmotor.

7. Verwendung des Polyurethanschaums gemäß einem der Ansprüche 1-5 als Filter, Dichtung oder Abdichtvorrichtung in Verbindung mit der Handhabung von heißen Fluiden.

8. Ein Verfahren zur Herstellung eines elastomeren Polyurethan-Formschaumstoffs gemäß Anspruch 1, das Folgendes beinhaltet: Bilden eines Gemischs, das ein aromatisches Polyisocyanat, eine isocyanatreaktive Komponente, mindestens ein Treibmittel, eine wirksame Menge mindestens eines Tensids und eine wirksame Menge eines oder mehrerer Katalysatoren enthält, Einführen des Gemischs in eine Form, Härten des Gemischs in der geschlossenen Form, um einen Polyurethan-Formschaumstoff zu bilden, der eine Schaumdichte von 250 bis 550 kg/m$^3$ aufweist, und Entformen des Polyurethanschaums, wobei die isocyanatreaktive Komponente Folgendes beinhaltet:

   a) ein Polyetherpolyol mit einem Hydroxyläquivalentgewicht von 800 bis 3000 oder ein Gemisch solcher Polyole, wobei das Polyetherpolyol oder Gemisch von Polyolen dispergierte Polymerpartikel enthalten kann;
   b) zu 1 bis 5 Gewichtsteilen pro 100 Gewichtsteilen der Komponente a) einen aliphatischen Diolkettenverlängerer mit einem Hydroxyläquivalentgewicht von bis zu 75; und
   c) zu 0,5 bis 3 Gewichtsteilen pro 100 Gewichtsteilen der Komponente a) einen Vernetzer, der mindestens drei aliphatische Hydroxylgruppen enthält und ein Hydroxyläquivalentgewicht von bis zu 75 aufweist.

9. Verfahren gemäß Anspruch 8, wobei die Form um 50 bis 200 % überpackt wird.

**Revendications**

1. Une mousse de polyuréthane moulée qui a une masse volumique de mousse allant de 250 à 550 kg/m$^3$, et est un produit de réaction d'un polyisocyanate aromatique et d'un constituant réactif à l'isocyanate en présence d'une quantité efficace d'un agent gonflant, d'une quantité efficace d'un agent tensioactif et d'une quantité efficace d'un ou de plusieurs catalyseurs, dans laquelle le constituant réactif à l'isocyanate contient :

   a) un polyol de polyéther ayant un poids équivalent d'hydroxyle allant de 800 à 3 000, ou un mélange de tels polyols, lequel polyol de polyéther ou mélange de polyols peut contenir des particules de polymère dispersées ;
   b) de 1 à 5 parties en poids, pour 100 parties en poids du constituant a), d'un allongeur de chaîne diol aliphatique ayant un poids équivalent d'hydroxyle allant jusqu'à 75 ; et
   c) de 0,5 à 3 parties en poids, pour 100 parties en poids du constituant a), d'un agent de réticulation qui contient au moins trois groupes hydroxyle aliphatique et a un poids équivalent d'hydroxyle allant jusqu'à 75.

2. La mousse de polyuréthane moulée de la revendication 1 dans laquelle le constituant réactif à l'isocyanate ne contient pas plus de 0,1 % en poids de polyols qui contiennent des groupes amino tertiaire ou de composés qui contiennent des groupes amino primaire ou secondaire.

3. La mousse de polyuréthane moulée de n'importe quelle revendication précédente, dans laquelle le constituant c) est un éthoxylate et/ou propoxylate de triméthylolpropane ayant un poids équivalent d'hydroxyle allant jusqu'à 60 et le constituant b) est l'éthylène glycol.

4. La mousse de polyuréthane moulée de n'importe quelle revendication précédente dans laquelle l'agent gonflant est l'eau.

5. La mousse de polyuréthane moulée de n'importe quelle revendication précédente, qui a une déformation rémanente à la compression après vieillissement à chaud au-dessous de 15 % et une dureté Shore A de moins de 30, mesurées tel qu'indiqué dans la description.

6. Utilisation de la mousse de polyuréthane de n'importe quelle revendication précédente en tant que filtre, joint d'étanchéité ou dispositif d'étanchéité en rapport avec un moteur à combustion interne.

7. Utilisation de la mousse de polyuréthane de n'importe lesquelles des revendications 1 à 5 en tant que filtre, joint d'étanchéité ou dispositif d'étanchéité en rapport avec la manipulation de fluides chauds.

8. Un procédé pour réaliser une mousse de polyuréthane moulée élastomère de la revendication 1, comprenant le fait de former un mélange contenant un polyisocyanate aromatique, un constituant réactif à l'isocyanate, au moins un agent gonflant, une quantité efficace d'au moins un agent tensioactif et une quantité efficace d'un ou de plusieurs catalyseurs, le fait d'introduire le mélange dans un moule, le fait de faire durcir le mélange dans le moule fermé afin de former une mousse de polyuréthane moulée ayant une masse volumique de mousse allant de 250 à 550 kg/m$^3$, et le fait de démouler la mousse de polyuréthane, dans lequel le constituant réactif à l'isocyanate contient :

   a) un polyol de polyéther ayant un poids équivalent d'hydroxyle allant de 800 à 3 000, ou un mélange de tels polyols, lequel polyol de polyéther ou mélange de polyols peut contenir des particules de polymère dispersées ;
   b) de 1 à 5 parties en poids, pour 100 parties en poids du constituant a), d'un allongeur de chaîne diol aliphatique ayant un poids équivalent d'hydroxyle allant jusqu'à 75 ; et
   c) de 0,5 à 3 parties en poids, pour 100 parties en poids du constituant a), d'un agent de réticulation qui contient au moins trois groupes hydroxyle aliphatique et a un poids équivalent d'hydroxyle allant jusqu'à 75.

9. Le procédé de la revendication 8, dans lequel le moule est garni avec un excès allant de 50 à 200 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3278457 A
- US 3278458 A
- US 3278459 A
- US 3404109 A
- US 3427256 A
- US 3427334 A
- US 3427335 A
- US 5470813 A
- US 5627120 A